# EUROPEAN PATENT SPECIFICATION

(11) **EP 4 424 450 B1**
(45) Date of publication and mention of the grant of the patent: **08.04.2026**
(21) Application number: 24158970.4
(22) Date of filing: 21.02.2024
(51) Int. Cl.: B23K 9/10

(54) **HYBRID WELDING SYSTEM**
HYBRIDSCHWEISSSYSTEM
SYSTÈME DE SOUDAGE HYBRIDE

(30) Priority: 21.02.2023 US 202363486151 P; 08.12.2023 US 202363607841 P; 20.02.2024 US 202418582376
(43) Date of publication of application: 04.09.2024
(60) Divisional application: 26156442.1
(73) Proprietor: Illinois Tool Works Inc., Glenview IL 60025 (US)
(72) Inventor: ALBRECHT, Bruce P., Glenview, 60025 (US); MANTHE, Alan Adam, Glenview, 60025 (US); ALBRECHT, Jack Robert, Glenview, 60025 (US)
(74) Representative: HGF

(56) References cited:
- US-B2- 10 688 584

## Description

### FIELD OF THE DISCLOSURE

This disclosure relates generally to welding systems, and more particularly to hybrid welding systems.

### BACKGROUND

Conventional welding power supplies are limited to their rated output. In some cases, battery-assisted systems have been used to increase the typical capacity of welding power supplies. However, conventional battery-assisted systems are either integrated with the welding power supply or require the welding power supply to be reconfigured between charging the battery and welding. US10688584 describes a portable welding arrangement which includes a welding apparatus having a storage battery, a power source, a welding control means and a connection for a welding torch. The operating mode of the welding apparatus can be changed between a standby mode and a welding mode. The portable welding arrangement includes a charging apparatus that can be connected to a power supply network and to the welding apparatus and has a charge controller for charging the storage battery.

### SUMMARY

Hybrid welding systems and hybrid welding power supplies are disclosed, substantially as illustrated by and described in connection with at least one of the figures, as set forth more completely in the claims. More particularly, the invention relates to a welding system in accordance with claim 1.

### BRIEF DESCRIPTION OF THE DRAWINGS

FIG. 1 is a block diagram of an example hybrid welding system in accordance with aspects of this disclosure.
FIG. 2 is a block diagram of another example hybrid welding system in accordance with aspects of this disclosure.
FIG. 3A illustrates an example user interface which may implement the user interface of FIGS. 1 and/or 2 to display a determined welding capacity and supported and/or unsupported values for welding parameters based on the determined welding capacity.
FIG. 3B illustrates the example user interface which may implement the user interface of FIGS. 1 and/or 2 to display a determined welding capacity in terms of an electrode being used based on the selected welding parameters.
FIG. 4 illustrates another example user interface which may implement the user interface of FIGS. 1 and/or 2 to display a determined welding capacity and alternative parameters supported by the determined welding capacity.
FIG. 5 illustrates another example user interface which may implement the user interface of FIGS. 1 and/or 2 to display a determined welding capacity and alternative parameters supported by the determined welding capacity.
FIG. 6 is a block diagram of an example welding system to monitor multiple battery-powered welding power supplies, in accordance with aspects of this disclosure.
FIG. 7 illustrates an example user interface that may implement the repository user interface of FIG. 6 to determine ones of the battery-powered welding power supplies that can provide welding under requested parameters.
FIGS. 8A and 8B illustrate a flowchart representative of example machine readable instructions which may be executed by the control circuitry of FIGS. 1 and/or 2 to advise and control a hybrid welding power supply based on energy storage device(s).
FIG. 9 is a flowchart representative of example machine readable instructions which may be executed by the battery monitor of FIGS. 1 and/or 2 to determine one or more properties of batteries connected to the hybrid welding power supply.
FIG. 10 is a block diagram of an example computing device that may implement the computing device and/or the external computing system of FIG. 6.

The figures are not necessarily to scale. Wherever appropriate, similar or identical reference numerals are used to refer to similar or identical components.

### DETAILED DESCRIPTION

Conventional battery-powered welding systems rely on the operator to make decisions regarding the appropriate welding parameters for battery-powered or hybrid welding, and to determine whether the level of charge is appropriate for the desired welding task. Furthermore, conventional battery-powered or hybrid welding systems are intended to be used with a particular type of battery, which may have specific properties such as charge capacity or output current.

Disclosed welding systems and methods provide operator guidance and/or more effective sets of parameters or operations for battery-powered or hybrid welders. In some examples, a hybrid welding power supply is provided with control circuitry and/or monitoring circuitry to determine the utility power capability and/or battery condition and/or capability. Based on monitoring the available energy sources, disclosed welding systems and methods provide guidance to the operator, such as improved parameters, improved welding operations, expected welding capacity, and/or any combination of information. Such guidance, parameters, operations, and/or other information may be updated when the welding power supply is connected to other batteries and/or utility sources. In this manner, disclosed example welding systems and methods provide operators with an improved understanding of the use of energy sources, leading to improved usability (e.g., fewer instances of unexpected welding outages due to lack of energy) and/or improved productivity (e.g., by assisting the user with managing expectations, properly matching equipment parameters to available energy, and/or selecting equipment having sufficient energy for welding needs).

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "bidirectional DC-DC converter" refers to any bidirectional circuit topology that converts voltage up and/or down in a first direction and converts voltage up and/or down in a second direction. Example bidirectional DC-DC converters include buck-boost and/or boost-buck topologies, a SEPIC converter, a Ćuk converter, or the like. For example, a bidirectional DC-DC converter may refer to a DC-DC converter that boosts voltage in one direction and bucks voltage in the opposing direction.

As used herein, the term "recognized battery unit" refers to a battery unit that is approved, authorized, and/or otherwise has identifiable minimum characteristics, such as charge state, nominal voltage, minimum voltage, maximum voltage, and/or charge capacity. Recognition can occur through signaling, measurement, and/or any other mechanism.

As used herein, a "circuit" includes any analog and/or digital components, power and/or control elements, such as a microprocessor, digital signal processor (DSP), software, and the like, discrete and/or integrated components, or portions and/or combinations thereof.

Disclosed example welding systems include: a power input configured to receive input power from one or more batteries; power conversion circuitry configured to convert the input power from the one or more batteries to welding power; a user interface configured to input one or more parameters for the welding power; a battery monitor configured to determine one or more properties of the one or more batteries; and control circuitry configured to: determine a welding capacity associated with the one or more parameters for the welding power and based on the determined one or more properties of the one or more batteries; in response to determining that the welding capacity does not support the one or more parameters for the welding power, output an indication representative of at least one limitation on the one or more parameters for the welding power based on the welding capacity; in response to determining that the welding capacity supports the one or more parameters for the welding power, output an indication of remaining welding capacity; and control the power conversion circuitry based on the one or more parameters.

Some example welding systems further include a utility power monitor configured to determine whether utility power is input to the power input and, when the utility power is input to the power input, to determine one or more properties of the utility power. In some example welding systems, the control circuitry is configured to determine the welding capacity based on the one or more properties of the utility power. In some example welding systems, the one or more properties of the utility power include at least one of a source type of the utility power, an input voltage of the utility power, a number of phases of the utility power, a circuit breaker type of the utility power, or a circuit breaker rating of the utility power. Some example welding systems, further include load sharing circuitry configured to control a balance of power input from the utility power and the one or more batteries.

In some example welding systems, the one or more parameters of the welding power include at least one of workpiece thickness, output voltage, output current, wire feed speed, welding wire diameter, welding wire type, welding process, pulse frequency, or pulse magnitude. Some example welding systems further include communication circuitry configured to communicate the one or more alternative parameters or the duration to a welding accessory.

In some example welding systems, the battery monitor includes battery test circuitry configured to test the one or more batteries to determine the at least one of the one or more properties of the one or more batteries. In some example welding systems, the battery monitor includes communication circuitry configured to communicate with the one or more batteries to determine the at least one of the one or more properties of the one or more batteries.

In some example welding systems, the one or more properties of the one or more batteries comprise at least one of a battery temperature, a battery temperature curve, a battery charge level, a battery charge capacity, a battery impedance, an upper current limit, a battery size, a battery chemistry, a battery brand, a battery model, a number of charge-discharge cycles, a battery ampere-hour rating, a battery voltage, a battery energy density, a specific energy density, a power density, or a battery discharge curve.

In some example welding systems, the control circuitry is configured to: determine, based on the determined one or more properties of the one or more batteries, supported values of the one or more parameters and unsupported values of the one or more parameters; display the supported values of the one or more parameters and the unsupported values of the one or more parameters via the user interface; receive supported values of the one or more parameters via the user interface; and control the power conversion circuitry based on the received values of the one or more parameters.

In some example welding systems, the control circuitry is configured to: determine one or more alternative parameters based on the welding capacity; and output the one or more alternative parameters via the user interface. In some example welding systems, the control circuitry is configured to output the indication of the remaining welding capacity as at least one of a remaining welding duration using the one or more parameters, a length of welding using the one or more parameters, or a number of welds of predetermined length using the one or more parameters.

In some example welding systems, the control circuitry is configured to calculate a quantity of welding that can be performed in terms of an electrode to be used for a welding operation according to the one or more parameters, and display the quantity of welding in the terms of the electrode. In some such example welding systems, the control circuitry is configured to display the quantity of welding that can be performed as at least one of: pounds of wire electrode, inches of wire electrode, a number of stick electrodes, or inches of welding.

Some disclosed example welding systems include: a power input configured to receive input power from one or more batteries; power conversion circuitry configured to convert the input power from the one or more batteries to welding power; a user interface configured to input one or more parameters for the welding power; a battery monitor configured to determine one or more properties of the one or more batteries; and control circuitry configured to: determine, based on the determined one or more properties of the one or more batteries, supported values of the one or more parameters and unsupported values of the one or more parameters; display the supported values of the one or more parameters via the user interface; receive selected ones of the supported values of the one or more parameters via the user interface; and control the power conversion circuitry based on the received values of the one or more parameters.

Some example welding systems further include a utility power monitor configured to determine whether utility power is input to the power input and, when the utility power is input to the power input, to determine one more properties of the utility power, the power conversion circuitry configured to convert the utility power to the welding power. In some example welding systems, the control circuitry is configured to determine the supported values and the unsupported values based on the one or more properties of the utility power. In some example welding systems, the one or more properties of the utility power include at least one of a source type of the utility power, an input voltage of the utility power, a number of phases of the utility power, a circuit breaker type of the utility power, or a circuit breaker rating of the utility power. Some example welding systems further include load sharing circuitry configured to control a balance of power input from the utility power and the one or more batteries.

In some example welding systems, the one or more parameters of the welding power include at least one of workpiece thickness, output voltage, output current, wire feed speed, welding wire diameter, welding wire type, welding process, pulse frequency, or pulse magnitude. In some example welding systems, the battery monitor includes battery test circuitry configured to test the one or more batteries to determine the at least one of the one or more properties of the one or more batteries. In some example welding systems, the battery monitor includes communication circuitry configured to communicate with the one or more batteries to determine the at least one of the one or more properties of the one or more batteries.

In some example welding systems, the one or more properties of the one or more batteries include at least one of a battery temperature, a battery temperature curve, a battery charge level, a battery charge capacity, a battery impedance, an upper current limit, a battery size, a battery chemistry, a battery brand, a battery model, a number of charge-discharge cycles, a battery ampere-hour rating, a battery voltage, a battery energy density, a specific energy density, a power density, or a battery discharge curve. In some example welding systems, the control circuitry is further configured to display the unsupported values of the one or more parameters via the user interface.

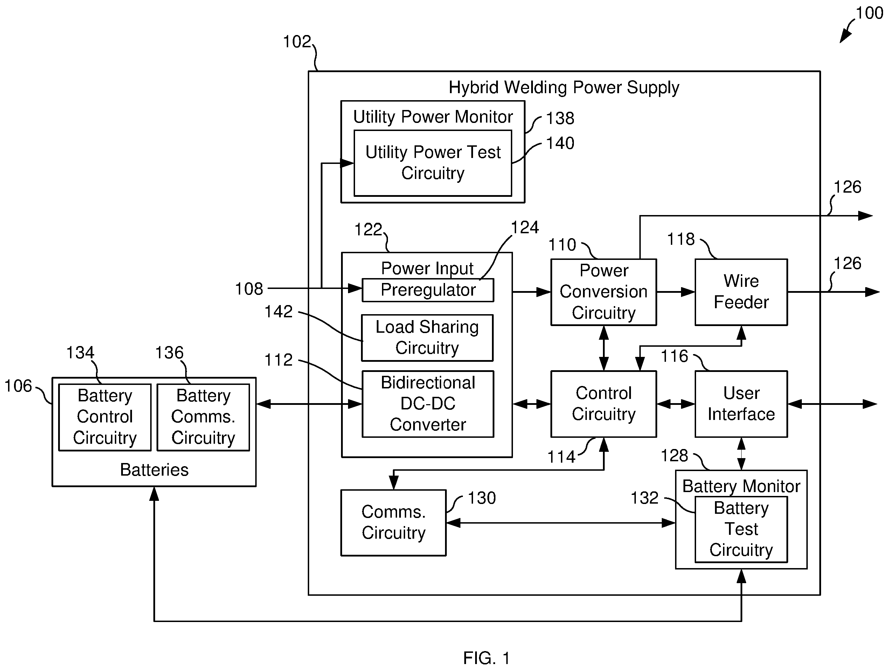

FIG. 1 is a block diagram of an example hybrid welding system 100. The example hybrid welding system 100 of FIG. 1 includes a hybrid welding power supply 102.

The hybrid welding power supply 102 is connected to one or more batteries 106. The batteries 106 may include any type or combination of types of energy storage devices, such as batteries, supercapacitors, thermal energy storage, chemical energy storage, and/or mechanical energy storage devices. While the following examples are discussed with reference to batteries, this disclosure applies to any other type of energy storage that is capable of adaptation for welding.

The hybrid welding power supply 102 may also be connected to utility (e.g., AC input) power 108 from a power source such as a generator, a mains power source, a battery-powered inverter supply, and/or any other power source. The hybrid welding power supply 102 may be powered by either or both of the batteries 106 or the utility power 108 at any given time.

When the hybrid welding power supply 102 is connect to both the AC input power 108 and to the batteries 106, the hybrid welding power supply 102 may charge the batteries 106. Conversely, when energy is required that is not available from the utility power 108, the batteries 106 may provide power to the hybrid welding power supply 102.

The hybrid welding power supply 102 includes power conversion circuitry 110, a bidirectional DC-DC converter 112, control circuitry 114, a user interface 116, and a wire feeder 118.

The power conversion circuitry 110 is a circuit that converts direct current (DC) power to welding power 120. The DC power used by the power conversion circuitry 110 is received from a power input 122. The power input 122 includes a preregulator 124 and/or the bidirectional DC-DC converter 112, and supplies one or more DC buses with energy (e.g., a DC bus for the output of the preregulator 124 and one or more DC buses for the output of the bidirectional DC-DC converter 112, one DC bus for each battery connection, etc.). The preregulator 124 may include a rectifier to rectify the AC input from the utility power 108. The preregulator 124 further includes circuitry to convert the rectified AC input to the bus voltage for providing power to the power conversion circuitry 110.

In some examples, the power input 122 includes load sharing circuitry, multiple converters, and/or multi-stage converters, to supply a DC bus with energy from multiple batteries or other energy storage devices. In some examples, the power input 122 may accept energy from different types of batteries simultaneously in addition to accepting energy from multiple batteries of the same type.

The power conversion circuitry 110 converts the energy present at the DC bus (e.g., from the power input 122) to a weld output 126. For example, the power conversion circuitry 110 may include a switched mode power supply, which is controlled by the control circuitry 114 based on specified weld parameters and feedback.

The bidirectional DC-DC converter 112 is a circuit that converts input power (e.g., from the DC bus powered by the utility power 108) to charge the batteries 106. The bidirectional DC-DC converter 112 also converts the stored power in the batteries 106 to converted power to output to the power conversion circuitry 110 (e.g., via one or more DC buses) for output to the power conversion circuitry 110.

The control circuitry 114 controls the power conversion circuitry 110 to output the weld output 126. The control circuitry 114 controls the bidirectional DC-DC converter 112 to convert power from the power input 122 to charge the batteries 106 and/or controls the bidirectional DC-DC converter 112 to convert power from the batteries 106 to provide the converted battery power to the power conversion circuitry 110. The control circuitry 114 further controls the bidirectional DC-DC converter 112 to charge the batteries 106 when the utility power 108 is available and at least a portion of the utility power 108 is available for charging the batteries 106 (e.g., the utility power 108 is not completely consumed by the power conversion circuitry 110 and/or the wire feeder 118). Conversely, the control circuitry 114 controls the bidirectional DC-DC converter 112 to convert power from the batteries 106 to provide the converted battery power to the power conversion circuitry 110 when a demand for welding power is higher than can be provided by the utility power 108.

The example wire feeder 118 includes a wire feed motor to provide electrode wire to the welding operation (e.g., when the welding operation involves a wire feeder, such as when gas metal arc welding, flux cored arc welding, etc.). When the welding operation involves a wire feeder, the control circuitry 114 controls powers the wire feeder 118. The wire feeder 118 may be powered by the weld output 126 or by another output from the power conversion circuitry 110. In some other examples, the wire feeder 118 may be a separate device connected to the weld output 126 external to the hybrid welding power supply 102.

The user interface 116 enables input to the hybrid welding power supply 102 and/or output from the hybrid welding power supply 102 to a user. The control circuitry 114 may indicate the state of charge of the batteries 106 and/or a mode of operation, such as a battery charging mode, an external power welding mode (e.g., welding mode powered by utility power), a combination welding-charging mode (e.g., welding and charging the batteries 106 using utility power 108), a battery powered welding mode, or a hybrid welding mode (e.g., welding boost mode powered by utility power and battery power), of the hybrid welding power supply 102 via the user interface 116.

The user interface 116 further includes inputs to allow an operator to specify welding parameters, such as a workpiece thickness, output voltage, output current, wire feed speed, welding wire diameter, welding wire type, welding process, pulse frequency, or pulse magnitude.

Battery powered welding power supplies and, particularly, power supplies with removable or disconnectable batteries, can be subject to variable, infrequent, and/or incomplete charging cycles. Because batteries take time to recharge, a work site or facility may provide a bank of batteries, or a bank of battery-powered welding power supplies, and associated chargers. In some cases, a welding operator who intends to rely at least partially on battery power to perform welding operations may want to know whether one or more desired welds can be successfully performed using a given set of one or more batteries before attempting the welds. If the state of the batteries would not be conducive to a successful result for the desired weld, the operator may need to wait for the batteries to charge, add battery capacity (e.g., add batteries to be used, select different batteries, etc.), and/or change the parameters of the desired weld.

The example control circuitry 114 monitors the properties of connected batteries 106 and/or utility power 108 to provide information about the batteries, utility power, and welding capacity to the operator. For example, as the power available to the power input 122 from the batteries 106 increases, the control circuitry 114 may determine that thicker materials can be welded, a longer time, length, and/or number of welds of a given length are available to weld for a given set of parameters, use of the utility power 108 can be decreased, the types of usable weld processes increases, the usable consumable sizes (e.g., electrode diameters) increase, and/or other enhancements and/or augmentations to welding may become available. Conversely, as the power available from the batteries 106 decreases, the control circuitry 114 may determine that the thickness of materials that can be welded decreases, less time is available to weld for a given set of parameters, more utility power 108 may be needed, the types of usable weld processes are limited, the usable consumable sizes (e.g., electrode diameters) decrease, and/or the hybrid welding power supply 102 becomes otherwise limited.

The control circuitry 114 receives and uses properties of the batteries 106 to determine welding capacity, supported values for welding parameters, and/or alternatives to unsupported values for welding parameters. To determine the properties of the batteries 106, the example hybrid welding power supply 102 includes a battery monitor 128 and/or communications circuitry 130.

The battery monitor 128 may interface with the batteries 106 to determine one or more properties of the batteries 106. For example, the battery monitor 128 may include battery test circuitry 132 which can function as one or more loads to the batteries 106 while measuring changes in voltage, current, temperature, and/or other properties. Additionally or alternatively, the battery monitor 128 may supply a small current to one of the batteries 106 (e.g., from the utility power 108 or another one of the batteries 106) to determine the response. In still other examples, the battery test circuitry 132 may perform voltage and/or current measurements, and/or measure voltage and/or current over time, to learn or infer the properties of the batteries 106. By analyzing the response of the batteries 106, the battery monitor 128 can determine properties of the batteries 106 for use by the control circuitry 114 in determining welding capacity.

Some types of batteries 106 include battery control circuitry 134 and/or battery communications circuitry 136. For example, battery control circuitry 134 may control internal load balancing of the batteries 106, and/or battery communications circuitry 136 may allow for communication of battery information to external devices and/or implement control of one or more aspects of the batteries 106 by an external device. The example battery communications circuitry 136 of the batteries 106 and/or the communications circuitry 130 of the hybrid welding power supply 102 may be configured to communicate through any wired or wireless techniques. For example, the battery communications circuitry 136 and/or the communications circuitry 130 may communicate via serial communications through the battery contacts. In other examples, the battery communications circuitry 136 and/or the communications circuitry 130 may communicate wirelessly via radio frequency identification (RFID), near field communications (NFC), Bluetooth^{®}, and/or any other close-proximity communications, or any other desired wireless communications technique.

The example hybrid welding power supply 102 further includes a utility power monitor 138. The utility power monitor 138 monitors the presence and properties of the utility power 108, and provides the properties of the utility power 108 to the control circuitry 114 to determine welding capacity. Example properties of the utility power 108 that may be monitored include AC voltage, number of phases, frequency, average current limit, peak current limit, a source type of the utility power (e.g., mains power, a battery-powered inverter, a fuel-driven generator, etc.), a circuit breaker type of the utility power, and/or a circuit breaker rating of the utility power 108. For battery-powered inverters and/or fuel-driven generator-type utility power, properties such as an average power limit, a peak power limit, remaining fuel, and/or RPM may be determining or monitored to determine welding capacity. The utility power monitor 138 may receive one or more properties via the user interface 116 and/or by testing the utility power 108 via utility power test circuitry 140. The utility power test circuitry 140 may, for example, measure the AC voltage and/or frequency via a voltage monitor, and/or apply an impulse load to the utility power 108 to measure a current response. The properties of the utility power 108 may be provided to the control circuitry 114 for determination of welding capacity (e.g., in combination with the properties of the batteries 106).

The example power input 122 may further include load sharing circuitry 142. The load sharing circuitry 142 controls a balance of power input from the utility power 108 and the one or more batteries 106. For example, the control circuitry 114 may control the load sharing circuitry 142 to cause relatively more power to be drawn from the utility power 108 to preserve battery life and/or avoid unnecessary battery discharge. The control circuitry 114 may also control the load sharing circuitry 142 to cause relatively more power to be drawn from the batteries, such as to reduce high electricity costs and/or save fuel when utility power 108 is powered by an engine-driven (or other portable fuel-driven) source.

In some examples, the user interface 116 may provide a utility power selection input that defines different levels of power to be drawn from the utility power 108 (e.g., with the balance drawn from the batteries 106). Example utility power levels may include a low utility draw level, a medium utility draw level, and a high utility draw level.

The low utility draw level may be selected to reduce the power drawn from the utility power 108, such as when there are other devices on the utility power branch (e.g., the branch is not dedicated to the power supply 102). For example, the low utility draw level may limit utility drawn to only levels necessary to sustain the welding, with the balance drawn from the batteries 106. Alternatively, the low utility draw level may limit current drawn from the utility power 108 to less than a threshold current to reduce or prevent circuit breaker trips, with power drawn from the batteries 106 as needed to reduce the current drawn from the utility power 108.

Conversely, the high utility draw level may be selected to limit power drawn from the batteries 106, such as when there is a known dedicated utility branch for the power supply 102 and/or to maximize utility power usage and/or battery charge.

The medium utility draw level may be selected as a balance between the low and high utility draw levels. There may be more than one medium or intermediate utility draw levels, higher utility draw levels, and/or lower utility draw levels.

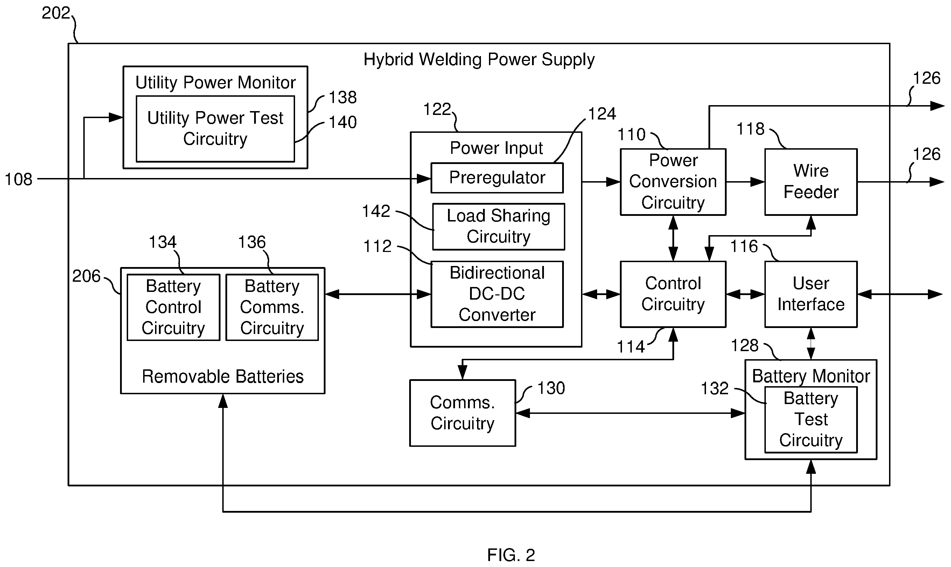

FIG. 2 is a block diagram of another example hybrid welding power supply 202. The example hybrid welding power supply 202 is similar to the hybrid welding power supply 102 of FIG. 1. The hybrid welding power supply 202 is similar to the hybrid welding power supply 102 of FIG. 1, with the exception that instead of being connected to external batteries, the hybrid welding power supply 202 includes removable batteries 206. The hybrid welding power supply 202 similarly includes the power conversion circuitry 110, bidirectional DC-DC converter 112, the control circuitry 114, the user interface 116, the wire feeder 118, the power input 122, the battery monitor 128, the communications circuitry 130, and the utility power monitor 138 as described above with reference to FIG. 1.

The removable batteries 206 may be simple batteries or may include battery control circuitry 134 to manage the charge state, charging, and/or discharging of the removable batteries 206. In some examples, the control circuitry 114 communicates with the removable batteries 206 via the battery communications circuitry 136 to determine whether the removable batteries 206 are a recognized battery unit. For example, the hybrid welding power supply 202 may be configured to operate with certain types of battery packs having specific characteristics. The control circuitry 114 may communicate with the battery control circuitry 134 in the removable batteries 206 via the battery communications circuitry 136 to identify the type of battery pack and, if a type of battery pack is identified, determine whether the identified type is recognized. A removable batteries 206 may be recognized by being authorized, approved, included in a list of battery packs accessible by the control circuitry 114, and/or through any other method of recognition or identification of the removable batteries 206 as suitable.

When the control circuitry 114 detects that the removable batteries 206 is recognized, the control circuitry 114 may control the bidirectional DC-DC converter 112 to charge the removable batteries 206 based on one or more predetermined properties of the removable batteries 206 (e.g., charge state, energy storage capacity, etc.). The control circuitry 114 may also control the bidirectional DC-DC converter 112 to convert power from the removable batteries 206 based on the one or more characteristics of the authorized battery unit to provide the converted power to the power conversion circuitry 110. The control circuitry 114 may, in some examples, control the power conversion circuitry 110 to limit the welding power based on the one or more characteristics of the removable batteries 206.

Conversely, if the control circuitry 114 does not identify the removable batteries 206 as a recognized battery, the control circuitry 114 may enable welding without use of the removable batteries 206, (e.g., control the bidirectional DC-DC converter 112 so as to disable converting power from the removable batteries 206), disable the bidirectional DC-DC converter 112 (e.g., prevent the bidirectional DC-DC converter 112 from charging or discharging the removable batteries 206), and/or display a notification via the user interface 116. The notification may be a simple LED, a text-based message, an image displayed via the display device, an audible alert, an and/or any other type of notification.

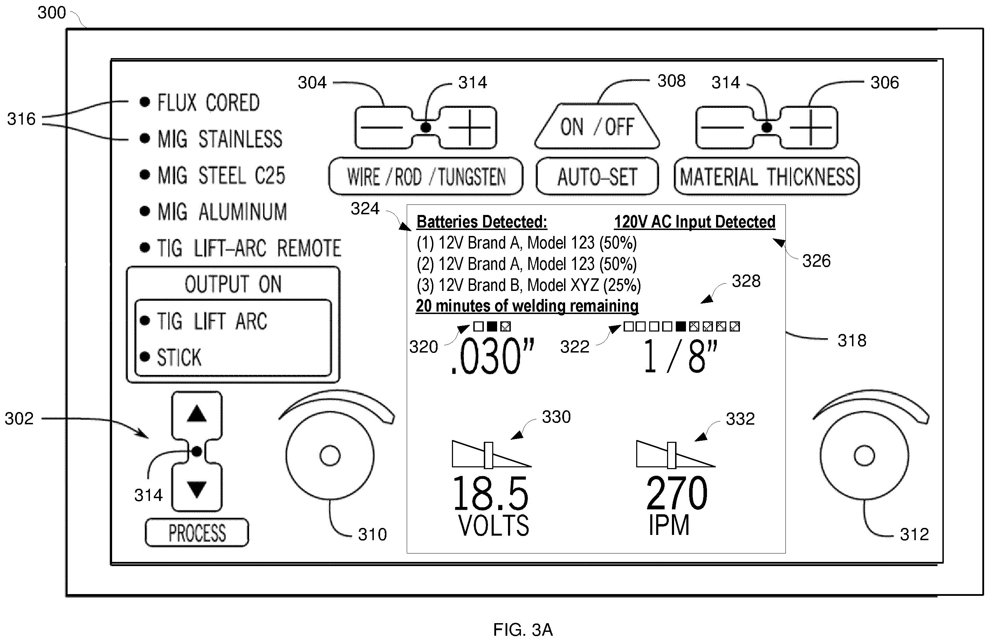

FIG. 3A illustrates an example user interface 300 which may implement the user interface 116 of FIGS. 1 and/or 2 to display a determined welding capacity and supported and/or unsupported values for welding parameters based on the determined welding capacity.

To enable an operator to specify welding parameters, the example user interface 300 includes a welding process selector 302, an electrode diameter adjustor 304, a material thickness adjustor 306, an Auto-Set selector 308, and welding parameter adjustment dials 310, 312.

The welding process selector 302 allows an operator or other user to select from a plurality of welding processes. For example, as depicted in FIG. 3A, the welding process selector 302 may allow an operator to choose from welding processes, such as a stick welding process, a flux cored welding process, one or more metal inert gas (MIG) welding processes, one or more tungsten inert gas (TIG) welding processes, etc. In addition to general welding processes, in some examples, the welding process selector 302 may also allow the operator to select the material of the welding electrode. For example, the operator may further select a stainless steel, another type of steel, an aluminum electrode, and/or any other specific type of electrode for implementing the MIG process. In some examples, the welding process selector 302 may also allow an operator to select a desired combination of welding process (e.g., stick, MIG, TIG, etc.), electrode material type (e.g., steel, aluminum, etc.), and gas type (e.g., C25, C100, Argon, etc.), and subsequently elect to enable the Auto-Set function of the welding system 10 to automatically set the appropriate voltage and wire feed speed and/or amperage welding parameters. Example Auto-Set functionality is disclosed in greater detail in U.S. Patent Number 8,604,389.

The electrode diameter adjustor 304 allows selection of a diameter or size of a welding electrode, such as an electrode wire, an electrode rod, or tungsten electrode, depending on the type of welding process type selected. In the illustrated example, the electrode diameter adjustor 304 includes a "+" pushbutton to increase the electrode diameter setting and a "-" pushbutton to decrease the electrode diameter setting. The material thickness adjustor 306 allows selection of a material thickness of the workpiece. The material thickness adjustor 306 may include a "+" pushbutton to increase the material thickness setting and a "-" pushbutton to decrease the material thickness setting. The electrode diameter and material thickness settings, in conjunction, have an effect on the voltage and amperage (i.e., electrical current) required to perform a given welding procedure.

An operator or other user may select the Auto-Set function via the Auto-Set selector 308. When the Auto-Set feature is enabled (e.g., activated by the operator), the operator may only be required to input the respective electrode diameter and material thickness settings for the power conversion circuitry 110 to automatically adjust (e.g., increase or decrease) voltage, wire feed speed, amperage, and/or other parameters to appropriate settings. The Auto-Set selector 308 may be, for example, an on/off electrical switch or on/off pushbutton, which may be activated or deactivated, to allow the operator to enable or disable the Auto-Set function.

In the example of FIG. 3A, the user interface 300 may include one or more light indicators 314 (e.g., LEDs in certain embodiments) to indicate whether the Auto-Set function is enabled or disabled. For example, in performing a MIG welding process, the operator may select the Auto-Set function, via the Auto-Set selector 308 and the one or more light indicators 314 may display a blue light, for example, or other indication to the operator that the Auto-Set function is enabled. Similarly, in some examples, the welding process selector 302 may be associated with a plurality of light indicators 316, each light indicator 316 being spatially aligned with a label corresponding to a respective welding process (e.g., "FLUX CORED", "MIG STAINLESS", and so forth). Manipulation of the welding process selector 302 changes the selected welding process, and the light indicator 316 that corresponds to the selected welding process displays, for example, a blue light, to indicate that the corresponding welding process has been selected.

The user interface 300 further includes a display screen 318 to output or convey information to the operator. The display screen 318 may be any display device capable of displaying visual graphical objects and/or alphanumeric texts relating to the setting of welding parameters, real-time operational statuses of the hybrid welding power supply 102, 202, etc. For example, the display screen 318 may be a liquid crystal display (LCD) screen, an organic LED (OLED) display, and/or any other type of display capable of outputting information to the operator. In the example of FIG. 3A, the display screen 318 displays a selected electrode diameter (e.g., .030"), a selected material thickness (e.g., 1/8"), a selected power source welding voltage (e.g., 18.5 volts), and a selected wire feed speed (e.g., 270 inches per minute).

In some examples, any of the welding process selector 302, the electrode diameter adjustor 304, the material thickness adjustor 306, the Auto-Set selector 308, the welding parameter adjustment dials 310 and 312, may be displayed as graphical input devices on the display screen 318 (e.g., graphical buttons, graphical sliders, graphical knobs, etc.) instead of, or in addition to, as physical input devices. For example, the display screen 318 may be a touchscreen configured to receive inputs from a user via such graphical input devices that are displayed on the display screen 318.

When the Auto-Set selector 308 is enabled, the display screen 318 may automatically display acceptable ranges of values of welding voltage and wire feed speed and/or amperage based upon inputs of the required electrode diameter and/or material thickness parameters (e.g., which are set based upon manipulation of the electrode diameter adjustor 304 and the material thickness adjustor 306). As used herein, an acceptable welding parameter value range may be a range of values within which the power conversion circuitry 110 holds the voltage and wire feed speed and/or amperage in response to an entered or estimated value of the electrode diameter and material thickness parameters, such that a weld may be effectively executed. For example, as depicted in FIG. 3A, a welding operator may input an electrode diameter of .030" and a material thickness of 1/8" via the user interface 300. In response, the control circuitry 114 may automatically set appropriate welding parameter settings (e.g., 18.5 volts and 270 inches per minute) to effectively execute a weld for these particular electrode diameter and material thickness characteristics. The appropriate welding parameters may then be displayed via the display screen 318. The user interface 300 also includes welding parameter adjustment dials 310 and 312, which may be used to manually adjust (e.g., increase or decrease) the voltage and wire feed speed parameters and/or amperage parameter within acceptable ranges of values, depending on the particular type of welding process selected using the welding process selector 302.

Conversely, when the Auto-Set selector 308 is disabled, the operator may then manually adjust (e.g. increase or decrease) the welding voltage and wire feed speed parameters within an acceptable range of values (e.g., by manipulating the welding parameter adjustment dials 310 and 312, which correspond to the parameter displayed on the display screen 318 directly above respective welding parameter adjustment dial 310 and 312).

In some examples, the display screen 318 may display a plurality of discrete electrode diameter setting indicators 320 (e.g., displayed as a set of discrete points along a segmented line of a range of potentially selectable electrode diameter settings). A discrete electrode diameter setting indicator 320 corresponding to the currently selected electrode diameter setting (e.g., .030" as illustrated in FIG. 3A) is highlighted (e.g., a different color, a different brightness) relative to other setting indicators. Accordingly, when a user selects an electrode diameter via the electrode diameter adjustor 304, the appropriate discrete electrode diameter setting indicator 320 is selected. The plurality of discrete electrode diameter setting indicators 320 are intended to aid the user to know where, within a range of potentially selectable electrode diameter settings, the currently selected electrode diameter setting is. As described herein, the number of discrete electrode diameter setting indicators 320 that are displayed by the display screen 318 is determined based on other settings entered by the user. For example, based on other settings entered via the user interface 300, the display screen 318 will only display discrete electrode diameter setting indicators 320 that correspond to electrode diameter settings that make sense based on these other entered settings.

Similarly, the display screen 318 may display a plurality of discrete material thickness setting indicators 322 (e.g., displayed as a set of discrete points along a segmented line of a range of potentially selectable material thickness settings). A discrete material thickness setting indicator 322 corresponding to the currently selected material thickness setting (e.g., 1/8") is highlighted (e.g., a different color, a different brightness) relative to other setting indicators. Accordingly, when a user selects a material thickness via the material thickness adjustor 306, the appropriate discrete material thickness setting indicator 322 is selected. The plurality of discrete material thickness setting indicators 322 are intended to aid the user to know where, within a range of potentially selectable material thickness settings, the currently selected material thickness setting is. As described herein, the number of discrete material thickness setting indicators 322 that are displayed by the display screen 318 is determined based on other settings entered by the user. For example, based on other settings entered via the user interface 38, the display screen 318 may only display discrete material thickness setting indicators 322 that correspond to material thickness settings that make sense based on these other entered settings.

The example user interface 300 also provides guidance to the operator based on determined properties of the batteries 106 and/or determined properties of the utility power 108. In the example of FIG. 3A, the display 318 includes a battery indicator 324, a utility power indicator 326, and a welding capacity indicator 328. The battery indicator 324 may display information about detected batteries or other energy storage devices, such as the types of batteries (e.g., nominal voltages, brands, model numbers, etc.) and respective charge levels (e.g., remaining charge as a percentage of capacity, remaining ampere-hours, etc.). The utility power indicator 326 displays whether utility power 108 is connected and/or the voltage of the detected utility power. The welding capacity indicator 328 displays a remaining welding capacity (e.g., remaining welding duration using the one or more parameters, a length of welding using the one or more parameters, or a number of welds of predetermined length using the one or more parameters) that can be sustained by the power conversion circuitry 110, which is determined by the control circuitry 114 based on the determined properties of the energy storage device(s) 110 and the properties of the utility power 108.

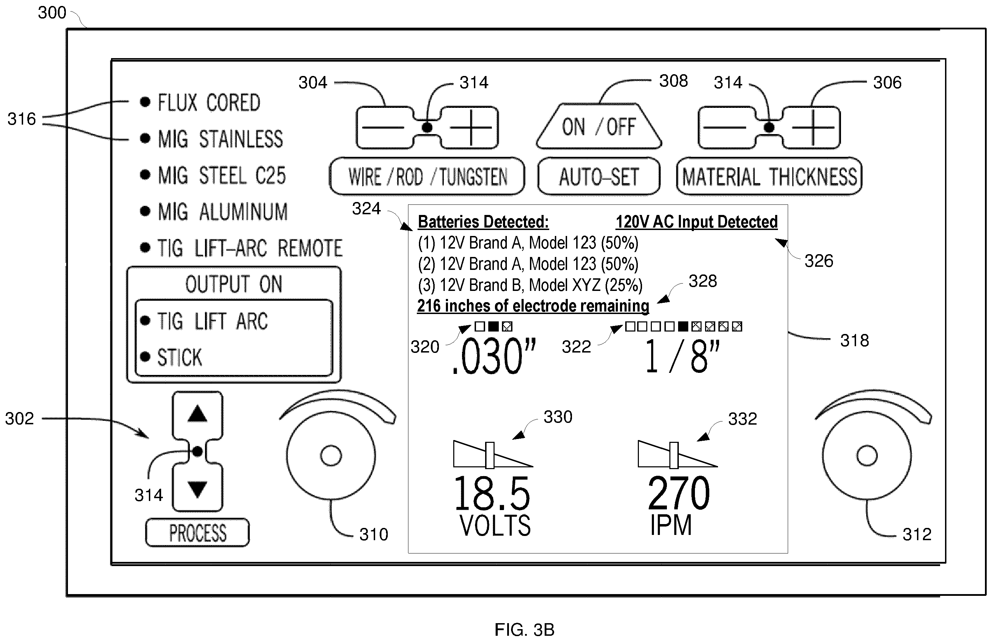

In some examples, as illustrated in FIG. 3B, the control circuitry 114 determines and displays a quantity of welding that can be performed in terms of the electrode being used. For example, for shielded metal arc welding (SMAW), the control circuitry 114 may calculate a number of stick electrodes that can be welded at the selected parameters and/or conditions (e.g., weld current setpoint, stick electrode diameter, stick electrode type, current limit for AC input 108, hybrid mode or battery-only mode, etc.) with the remaining battery capacity, and display the calculated number of stick electrodes as the welding capacity indicator 328. For gas metal arc welding (GMAW) or flux cored arc welding (FCAW), the control circuitry 114 may calculate a length in inches, and/or pounds of filler wire, that can be weldedat the selected parameters and/or conditions (e.g., weld voltage setpoint, wire feed speed setpoint, pulse parameters, wire electrode diameter, wire electrode type, current limit for AC input 108, hybrid mode or battery-only mode, etc.) with the remaining battery capacity, and display the calculated number of weld inches as the welding capacity indicator 328. For gas tungsten arc welding (GTAW), the control circuitry 114 may calculate a length in inches that can be welded at the selected parameters and/or conditions (e.g., weld current setpoint, tungsten electrode size, tungsten electrode type, current limit for AC input 108, hybrid mode or battery-only mode, etc.) with the remaining battery capacity, and display the calculated number of weld inches as the welding capacity indicator 328. As the welding parameters and/or conditions change, the control circuitry 114 recalculates the quantity of welding that can be performed and updates the welding capacity indicator 328. While example information is displayed by the battery indicator 324 and the utility power indicator 326, any other properties may be displayed, and/or the operator may be able to navigate one or more menus or interfaces to access additional information or properties of the energy storage device(s) 110 and the properties of the utility power 108.

Based on the properties of the batteries 106, the control circuitry 114 may determine that the welding capacity is insufficient to support one or more values for the welding parameters. As used herein, supported values of welding parameters refer to values for which the available energy is sufficient to perform at least a predetermined threshold duration, length, and/or other quantity of welding at those values. Conversely, as used herein, unsupported values of welding parameters refer to values for which the available energy is insufficient to perform at least the predetermined threshold duration, length, and/or other quantity of welding at those values.

In some examples, the control circuitry 114 may determine that some material thicknesses are not supported when the welding capacity is not sufficient to perform at least a threshold duration, length, and/or other quantity of welding using parameters (e.g., which may be derived from Auto-Set calculations or data). Based on the determination, the control circuitry 114 may control the display 318 to depict ones of the material thickness setting indicators 322 that correspond to the unsupported material thickness values using a different visual depiction than the indicators of the selected material thickness and different than other, supported material thicknesses. Similarly, the control circuitry 114 may control the display 318 to depict ones of the electrode diameter setting indicators 320 that correspond to the unsupported electrode diameter values using a different visual depiction than the indicators of the selected electrode diameters and different than other, supported electrode diameters.

Additionally or alternatively, the example display 318 may include a voltage range indicator 330 and/or a wire feed speed range indicator 332. The example voltage range indicator 330 is depicted as a ramp with a positioning bar. The ramp may indicate to the operator the effect on welding duration, length, and/or other quantity as the voltage parameter increases (e.g., reduced duration, length, and/or other quantity) or decreases (e.g., increased duration, length, and/or other quantity). The control circuitry 114 determines the supported voltages to correspond to the voltage range indicator 330, and displays the positioning bar along the ramp to illustrate to the operator the value of the selected voltage with respect to the range. In the illustrated example, the upper limit of the voltage range depicted in the voltage range indicator 330 is determined based on the threshold welding duration, length, and/or other quantity.

Similarly, the example wire feed speed range indicator 332 is depicted as another ramp with a positioning bar. The wire feed speed ramp may indicate to the operator the effect on welding duration as the wire feed speed (which affects current output) increases (e.g., reduced duration) or decreases (e.g., increased duration). The control circuitry 114 determines the supported wire feed speeds to correspond to the wire feed speed range indicator 332, and displays the positioning bar along the ramp to illustrate to the operator the value of the selected wire feed speed with respect to the range. In the illustrated example, the upper limit of the wire feed speed range depicted in the wire feed speed range indicator 332 is determined based on the threshold welding duration.

While the example indicators 330, 332 are depicted as ramps, in other examples either or both of the indicators 330, 332 may be depicted as trapezoids or other shapes. For example, a trapezoidal indicator may define a central preferred range as a balance of welding speed to welding duration (e.g., welding can be done faster without sacrificing excessive welding duration), and outer ranges that indicate less preferred ranges. For example, voltage and/or wire feed speed ranges above the preferred range may allow welding of thicker materials and/or faster travel speeds, but have substantially shorted available welding durations. Conversely, voltage and/or wire feed speed ranges below the preferred range may provide longer available welding durations, but offer reduced available ranges of material thicknesses and/or have lower travel speeds.

In some examples, the welding parameter adjustment dials 310 and 312 may be configured to only accept values that fall within the supported ranges of values for the welding parameters. For example, when manual adjustments are attempted via the welding parameter adjustment dials 310 and 312 that would bring their respective parameters to values outside of their respective acceptable range of values depicted by the indicators 330, 332, such manual adjustments may simply be ignored by the control circuitry 114, and not indicated as having any effect on the parameters via the display screen 318. In some examples, the control circuitry 114 may display information indicating a reason for ignoring or limiting adjustments via the adjustment dials 310, 312, such as indicating that utility power 108 is required (e.g., if utility power 108 is insufficient or not connected), that the connected batteries 106 should be charged (e.g., if the detected charge levels are less than 100% of capacity), and/or that additional battery capacity is required (e.g., if utility power 108 is connected and/or the battery charge levels are at 100%).

In some examples, the voltage range indicator 330 and/or the wire feed speed range indicator 332 may be displayed as an alternative to indicators associated with the Auto-Set function, which may display indicators based on suitability of welding according to the electrode diameter and material thickness parameters.

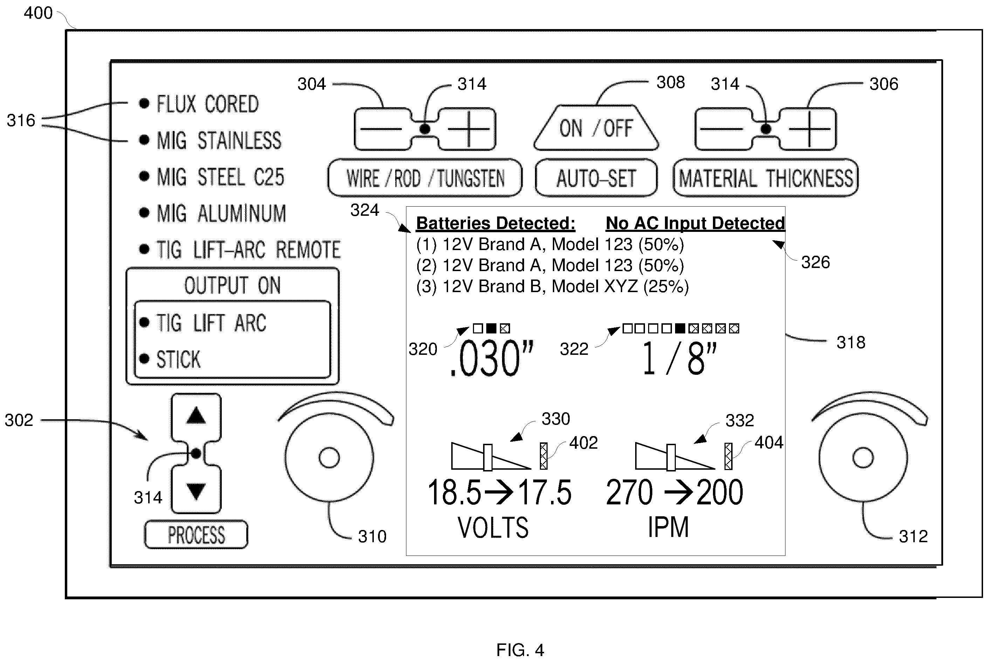

FIG. 4 illustrates another example user interface 400 which may implement the user interface 116 of FIGS. 1 and/or 2 to display a determined welding capacity and alternative parameters supported by the determined welding capacity. The example user interface 400 of FIG. 4 includes the welding process selector 302, the electrode diameter adjustor 304, the material thickness adjustor 306, the Auto-Set selector 308, the welding parameter adjustment dials 310, 312, the light indicators 314, 316, the display screen 318, the electrode diameter setting indicators 320, the material thickness setting indicators 322, the battery indicator 324, the utility power indicator 326, the voltage range indicator 330, and the wire feed speed range indicator 332 of FIG. 3A.

In the example of FIG. 4, the utility power monitor 138 has not detected utility power 108. The battery indicator 324 identifies the batteries 106 as specific batteries, and determines that the charge levels of the detected batteries are less than 100%. Based on the lack of utility power 108 and the properties of the batteries, the control circuitry 114 may determine that the welding capacity of the power supply does not support welding based on the specified values of the welding parameters (e.g., 18.5V, 270 inches per minute wire feed speed). The example control circuitry 114 may control the display 318 to show the voltage range indicator 330 and/or the wire feed speed range indicator 332 with respective positioning bars 402, 404 that extend outside of the determined voltage and wire feed speed ranges.

Although the control circuitry 114 has determined that the selected values of the parameters are not supported by the welding capacity, the control circuitry 114 also determines alternative values of the parameters that are supported. For example, the control circuitry 114 may determine a lower voltage and a lower wire feed speed that are supported by the welding capacity (e.g., values at which the portable hybrid weld module is capable of welding for at least a threshold duration). The display 318 displays the recommended change in the values from the selected values to the alternative values (e.g., 18.5 volts to the alternative 17.5 volts, 270 inches per minute to the alternative 200 inches per minute). The change to the alternative parameters may, but does not necessarily, require user confirmation. However, the control circuitry 114 may prevent operation at the selected parameters for which there is determined to be insufficient welding capacity. In some other examples, the control circuitry 114 calculates the welding capacity and alternative parameter values as an advisory function, and may allow operation or limited operation at the selected parameters (e.g., to allow operator override, to allow brief tack welding or spot welding, etc.).

In some examples, the communications circuitry 130 may communicate with one or more welding accessories, such as a welding helmet, an external interface, wearable equipment (e.g., a smart watch, personal protective equipment, a powered air purifying respirator (PAPR) unit, etc.), an operator's computing device (e.g., a smartphone, a tablet computer, a PDA, etc.), and/or any other welding accessories, to communicate the recommended alternative values of the welding parameters. In some examples, the welding accessory is capable of conveying the alternative parameters, conveying the change in welding capacity under the alternative values, and/or receiving confirmation or refusal of the alternative values.

In some examples, the interface 400 may display one or more limitations on the one or more parameters (e.g., in place of the welding capacity indicator 328). For example, the interface 400 may include an indication representative of a limitation on welding time, welding length, a number of welds, welding amperage, welding voltage, and/or available battery charge, which are determined to affect the ability to weld at the determined welding capacity (e.g., prevent welding at least a threshold time, length, or number of welds). One or more of the displayed limitations may be resolved by the change to the alternative parameters.

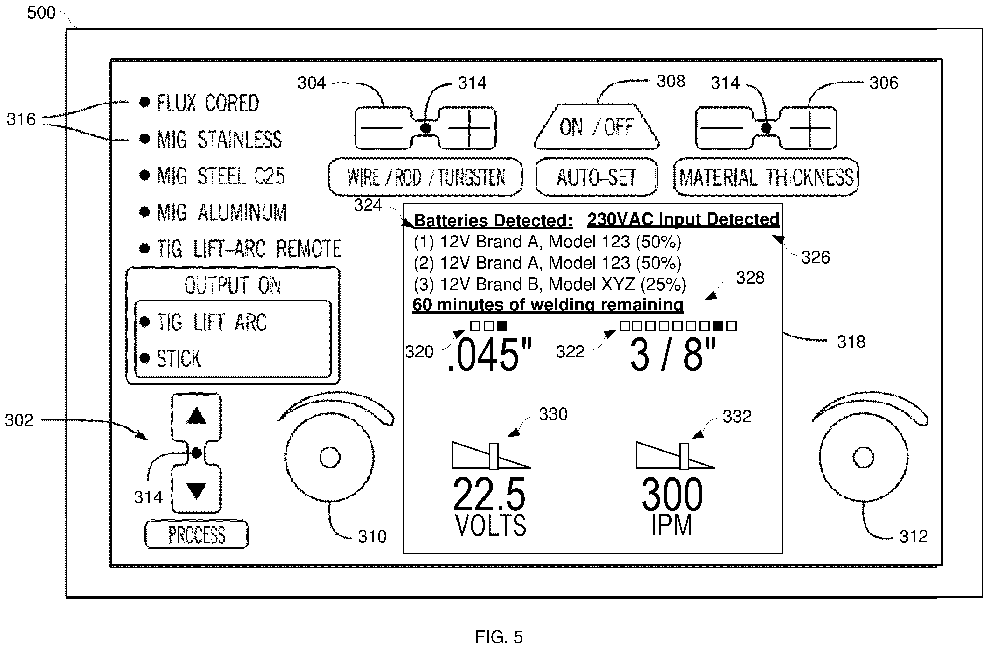

FIG. 5 illustrates another example user interface 500 which may implement the user interface 116 of FIGS. 1 and/or 2 to display a determined welding capacity and alternative parameters supported by the determined welding capacity. The example user interface 500 of FIG. 5 includes the welding process selector 302, the electrode diameter adjustor 304, the material thickness adjustor 306, the Auto-Set selector 308, the welding parameter adjustment dials 310, 312, the light indicators 314, 316, the display screen 318, the electrode diameter setting indicators 320, the material thickness setting indicators 322, the battery indicator 324, the utility power indicator 326, the voltage range indicator 330, and the wire feed speed range indicator 332 of FIG. 3A.

In the example of FIG. 5, the battery monitor 128 detects three batteries, including identifying information and charge properties. The battery indicator 324 displays the properties of the detected batteries. Additionally, the utility power monitor 138 detects that 230VAC input power is detected, and the utility power indicator 326 indicates the detected utility power input on the display 318. Due to the higher power available to the hybrid welding power supply 102, 202, the control circuitry 114 determines that the welding capacity is higher, and/or determines that more of the material thicknesses and electrode thicknesses are supported within the available welding capacity. Additionally, the electrode diameter setting indicator 320 and the material thickness setting indicator 322 indicate that more of the electrode diameters and material thicknesses are available than the lower welding capacity available in the example of FIG. 3A.

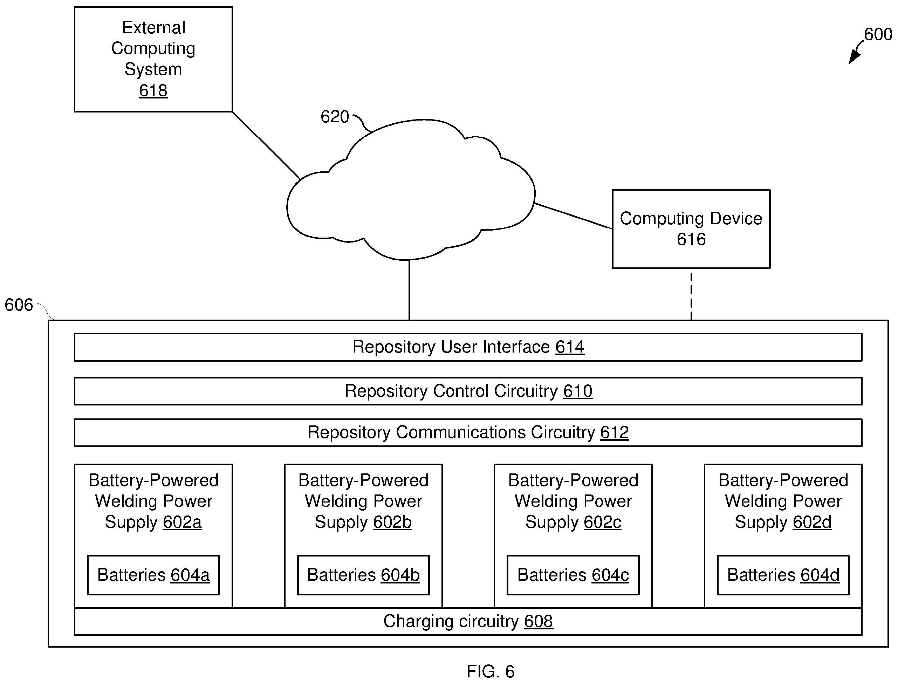

FIG. 6 is a block diagram of an example welding system 600 to monitor multiple battery-powered welding power supplies 602a-602d. The welding system 600 may implement a construction site or other location having multiple battery-powered welding systems which benefit from portability.

The example battery-powered welding power supplies 602a-602d may be implemented by the hybrid welding power supplies 102, 202 of FIGS. 1 or 2. Each of the battery-powered welding power supplies 602a-602d include, are connected to, or are otherwise associated with one or more batteries 604a-604d.

In the example of FIG. 6, the battery-powered welding power supplies 602a-602d are positioned in a repository 606 (e.g., a rack, locker, cage, or other housing). The battery-powered welding power supplies 602a-602d may be removed from the repository 606 for use and returned to the repository 606 for charging or when otherwise not in use.

The repository 606 includes charging circuitry 608, which provides power to charge the batteries 604a-604d (e.g., directly or via circuitry in the battery-powered welding power supplies 602a-602d, such as the bidirectional DC/DC converters 112) while the battery-powered welding power supplies 602a-602d are positioned in the repository 606. The repository 606 further includes repository control circuitry 610 and/or repository communication circuitry 612. The repository communication circuitry 612 may communicate with the battery-powered welding power supplies 602a-602d and/or the batteries 604a-604d, such as by wired communications or wireless communications. For example, the repository communication circuitry 612 may request and receive identifying information, feature information, and/or other characteristics of the battery-powered welding power supplies 602a-602d, and/or request and receive identifying information and/or battery characteristics from the batteries 604a-604d.

The example repository control circuitry 610 may determine the statuses of the connected battery-powered welding power supplies 602a-602d and/or the batteries 604a-604d, and assist an operator in selecting one of the battery-powered welding power supplies 602a-602d and/or the batteries 604a-604d via a repository user interface 614 and/or via a computing device 616. The repository user interface 614 may include one or more input devices (e.g., buttons, dials, switches, touchscreen, etc.) and one or more output devices (e.g., displays, touchscreens, etc.). The computing device 616 may be an operator device (e.g., a smartphone, laptop, tablet computer, etc.) in communication with the repository 606 via the repository communication circuitry 612.

The computing device 616 and/or the repository user interface 614 allow an operator to select one or more desired characteristics (e.g., a weld process, a type of workpiece, etc.). Based on the selected characteristics, the repository control circuitry 610 indicates (e.g., via the computing device 616 and/or the repository user interface 614) which of the battery-powered welding power supplies 602a-602d have the selected characteristics and/or corresponding welding capacity (e.g., can support selected weld processes, can perform one or a selected number of welds having particular parameters). Additionally or alternatively, the repository control circuitry 610 indicates (e.g., via the computing device 616 and/or the repository user interface 614) requirements for the battery-powered welding power supplies 602a-602d to perform welds according to the specified characteristics. For example, the repository control circuitry 610 may determine that the battery-powered welding power supply 602a can perform a specified weld (e.g., voltage and wire feed speed) with defined changes to the status of the battery-powered welding power supply 602a. Example changes may include plugging utility power to the battery-powered welding power supply 602a, adding energy storage devices, and/or changing one or more parameters of the specified weld.

The example system 600 further includes an external computing system 618 communicatively coupled to the repository 606 via one or more networks (e.g., local area networks, wide area networks, the Internet, etc.). The external computing system 618 may receive information about the power supplies 602a-602d and/or the batteries 604a-604d for remote monitoring and/or power supply selection. For example, an operator who is searching a larger area or site for an appropriate battery-powered welding power supply, in which the larger area or site may include multiple repositories each having multiple battery-powered welding power supplies, may send a request to the external computing system 618 in a similar manner as discussed above. For example, an operator may use the computing device 616 to send a request to the external computing system 618 via the network 620. The external computing system 618 may determine, and provide the location of, one or more power supplies matching specified characteristics, and/or one or more power supplies having additional requirements (e.g., requirements for utility power, etc.).

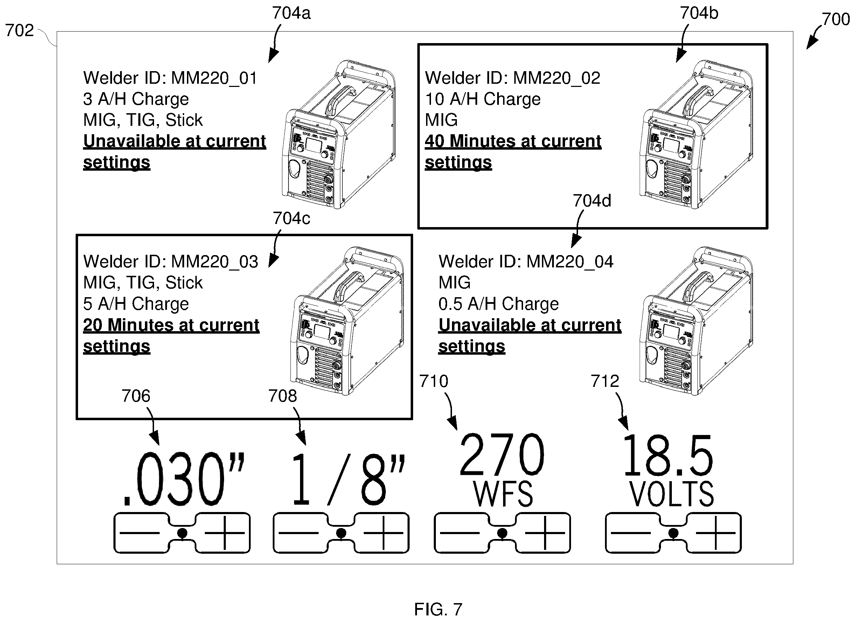

FIG. 7 illustrates an example user interface 700 that may implement the repository user interface 614 of FIG. 6 to determine ones of the battery-powered welding power supplies 602a-602d that can provide welding under requested parameters. The example user interface 700 may additionally or alternatively implement an interface at the computing device 616 (e.g., via a web browser, an app, etc.) and/or the external computing system 618 of FIG. 6.

The example user interface 700 may include a display 702 to display information determined by the repository control circuitry 610. The user interface 700 displays power supply indicators 704a-704d to represent identified or available ones of the welding power supplies 602a-602d. The user or operator may select one of the indicators 704a-704d to receive more information about the corresponding power supply, such as identification information, maintenance information, features or capabilities, location, and/or any other information.

The user interface 700 further includes parameter selectors, including an electrode diameter selector 706, a material thickness selector 708, a wire feed speed selector 710, and a voltage selector 712. However, any other selectors may be included, such as welding process selectors, current selectors, feature selectors, and/or utility power selectors (e.g., to indicate that utility power of a particular voltage or other property is available for use). As the parameter selectors 706-712 are adjusted, the repository control circuitry 610 (or the external computing system 618) calculate the welding capacities of the welding power supplies 602a-602d based on the selected values of the parameters.

The example indicators 704a-704d may include basic information about the corresponding welding power supply 602a-602d, such as identifier, supported processes, total energy stored, and/or determined welding capacity at the parameters set using the parameter selectors 706-712.

In the example of FIG. 7, the indicators 704b and 704c indicate (e.g., highlight) that the corresponding welding power supplies possess sufficient welding capacity to accomplish welding at the parameters specified using the selectors 706-712. Conversely, the indicators 704a, 704d indicate that the corresponding welding power supplies lack sufficient welding capacity to accomplish welding at the parameters specified using the selectors 706-712. If the operator wants to use one of the power supplies that are not indicated as having sufficient power, the interface 700 may provide alternative parameters and/or other requirements (e.g., use of utility power having at least a threshold voltage or other properties, instead of or in combination with the battery power, etc.).

In some examples, the user interface 700 sorts the 704a-704d indicators according to determined welding capacity, the ability of the corresponding welding power supplies to meet the requested parameters, proximity, and/or any other sorting method(s). Sorting may occur on one or more criteria (e.g., primary criterion, secondary criterion, tertiary criterion, etc.). In some examples, the indicators 704a-704d may be organized or sorted by location (e.g., organize according to which one of multiple repositories the welding power supplies are located). While four example indicators 704a-704d are illustrated in FIG. 7, more or fewer indicators 704a-704d may be shown, and/or additional pages of indicators and power supplies may be accessible via navigation inputs (e.g., navigation inputs).

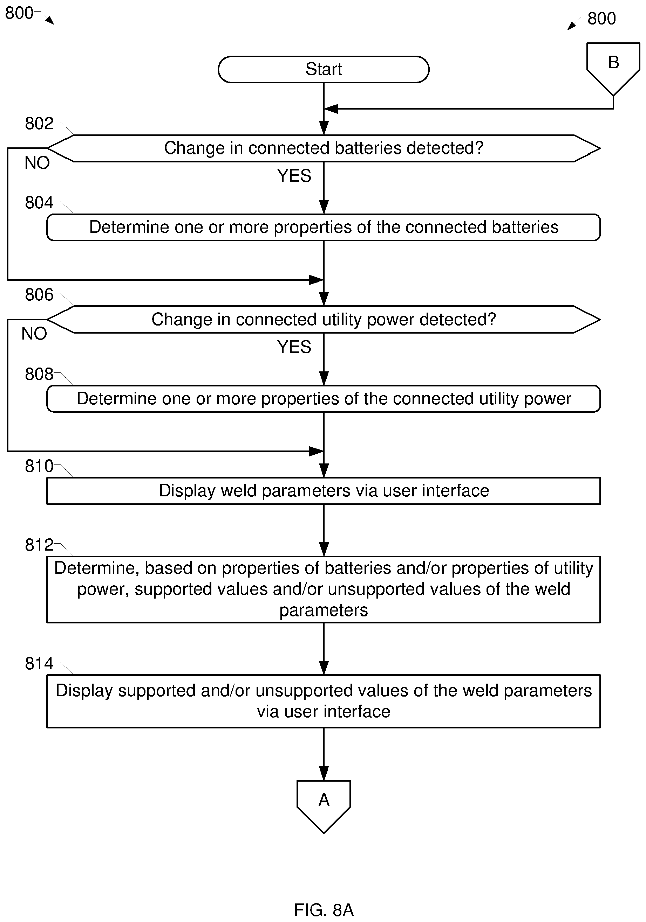

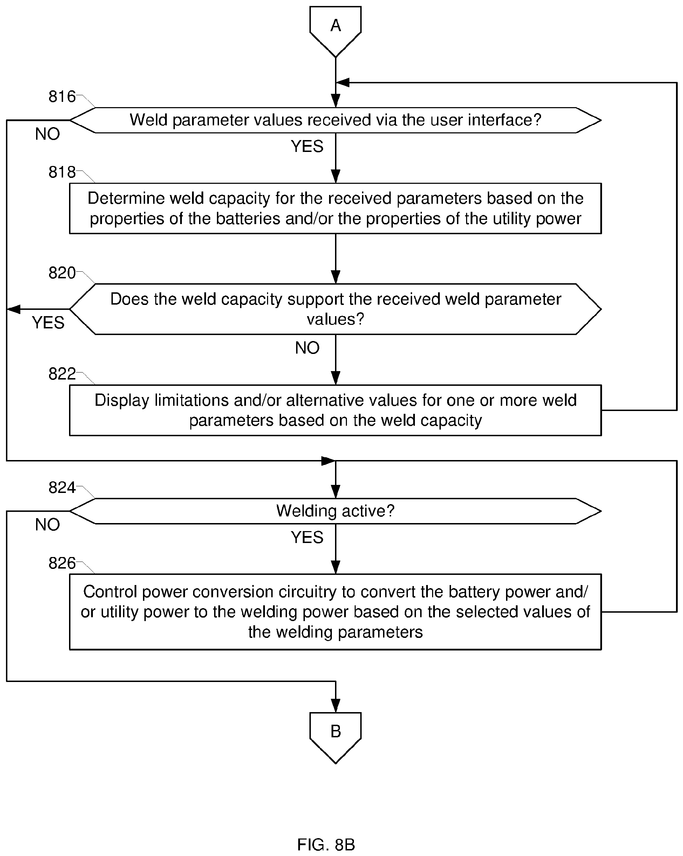

FIGS. 8A and 8B illustrate a flowchart representative of example machine readable instructions which may be executed by the control circuitry 114 of FIGS. 1 and/or 2 to advise and control a hybrid welding power supply 102, 202 based on energy storage device(s). While the flowchart is discussed below with reference to batteries, the example instructions 800 are applicable to any type of batteries 106.

At block 802, the battery monitor 128 determines whether a change in the connected batteries 106 is detected. For example, the battery monitor 128 may monitor to determine whether additional RFID tags are detected, and/or whether the voltage on one or more battery terminals has changed (e.g., terminals connecting each battery 106 to the hybrid welding power supply 102, 202). For example, as batteries 106 are connected or disconnected to the hybrid welding power supply 102, 202, the battery monitor 128 detects changes in voltage on the connection terminals. Additionally, the battery monitor 128 may detect changes in charge levels or other properties of the connected batteries.

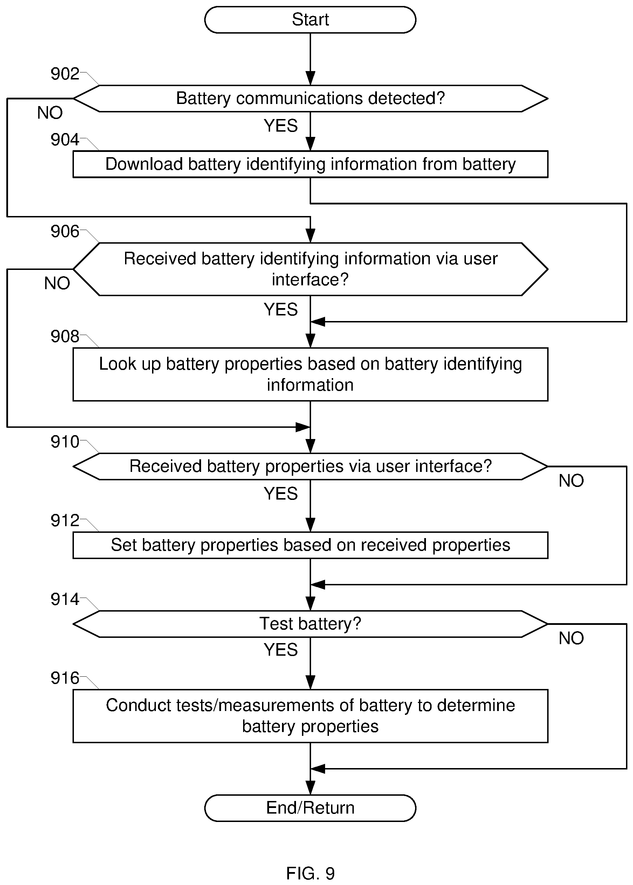

If a change in the connected batteries is detected (block 802), at block 804 the battery monitor 128 determines one or more properties of the connected batteries 106. For example, the battery monitor 128 may communicate with the battery communications circuitry 136 via the communications circuitry 130 to determine properties of the batteries 106. Additionally or alternatively, the battery test circuitry 132 may be used to measure one or more properties (e.g., voltage, temperature, etc.) of the batteries 106. An example implementation of block 804 is disclosed below with reference to FIG. 9.

After determining the properties of the batteries (block 804), or if no change in the batteries is detected (block 802), at block 806 the utility power monitor 138 determines whether a change in the connected utility power 108 has occurred. For example, the utility power monitor 138 may detect that utility power 108 has been connected or disconnected. If a change in utility power has been detected (block 806), at block 808 the utility power monitor 138 determines one or more properties of the connected utility power 108. For example, the utility power monitor 138 may use the utility power test circuitry 140 to measure the voltage, current limit, and/or other properties of the utility power 108.

After determining the properties of the utility power (block 808), or if a change in the utility power has not been detected (block 806), at block 810 the control circuitry 114 displays weld parameters via the user interface 116. For example, the control circuitry 114 may display one of the user interfaces 300, 400, 500 of FIGS. 3-5 including welding parameters such as voltage, wire feed speed, welding process, and/or other parameters.

At block 812, the control circuitry 114 determines, based on the properties of the batteries 106 and/or properties of the utility power 108, supported values and/or unsupported values of the weld parameters. For example, the control circuitry 114 may determine electrode diameters and/or material thicknesses that are not supported (e.g., not capable of welding for at least a threshold duration), and/or limits on voltage, wire feed speed, current, and/or pulse parameters (e.g., pulse peak current).

At block 814, the control circuitry 114 displays the supported and/or unsupported values of the weld parameters via the user interface 116. For example, as illustrated in FIG. 3A, the user interface 116 may show the electrode diameter setting indicators 320 with supported and/or unsupported indicators, the material thickness setting indicators 322 with supported and/or unsupported indicators, the voltage range indicator 330 with an upper limit on voltage, and/or a wire feed speed indicator 332 with an upper limit on wire feed speed.

Turing to FIG. 8B, at block 816 the control circuitry 114 determines whether weld parameter values have been received via the user interface 116. If weld parameter values have been received (block 816), at block 818 the control circuitry 114 determines a weld capacity for the received parameters, based on the properties of the batteries 106 and/or the properties of the utility power 108.

At block 820, the control circuitry 114 determines whether the weld capacity supports the received weld parameter values. For example, the control circuitry 114 may determine whether the available energy or power, and/or the peak deliverable energy or power, supports the received parameters. Additionally or alternatively, the control circuitry 114 may determine whether welding using the received parameters can be sustained for at least a threshold time duration. If the determined weld capacity does not support the received weld parameter values (block 820), at block 822 the control circuitry 114 displays applicable limitations on the one or more welding parameters, and/or alternative values for one or more of the weld parameters, based on the weld capacity. For example, as illustrated in FIG. 4, the control circuitry 114 may calculate and display a recommended change in one or more of the weld parameters to enable the weld capacity to support welding for at least a threshold duration. In some examples, the parameters are automatically changed to the alternative parameters. Alternatively, the user interface 116 may require confirmation of the alternative parameters from the operator for implementation. In some examples, the control circuitry 114 may display limitations on welding caused by the welding capacity via the user interface 116. Example limitations include welding time, welding length, a number of welds, welding amperage, welding voltage, and/or available battery charge, which are determined to affect the ability to weld at the determined welding capacity. The control circuitry 114 may display the alternative values to allow the operator to weld within the limitations on the parameters. Control may then return to block 816.

If welding parameter values are not received (block 816), at block 824 the control circuitry 114 determines whether welding is active. For example, the control circuitry 114 may determine whether welding has been initiated, whether welding is ongoing, and/or whether welding has stopped. If welding is active (block 824), at block 826 the control circuitry 114 controls the power conversion circuitry 110 to convert the battery power and/or utility power to welding output power based on the selected values of the welding parameters. For example, the selected values may be received via the user interface 116 and/or calculated by the control circuitry 114 based on the welding capacity and/or based on other parameters. Control then returns to block 824 while welding is active. When welding is not active (block 824), control returns to block 802.

FIG. 9 is a flowchart representative of example machine readable instructions 900 which may be executed by the battery monitor 128 of FIGS. 1 and/or 2 to determine one or more properties of batteries connected to the hybrid welding power supply. The example instructions 900 may be executed to implement block 804 of FIG. 8. While the flowchart is discussed below with reference to batteries, the example instructions 900 are applicable to any type of batteries 106. Furthermore, while the flowchart is described below with reference to determining the properties for one example battery, the instructions 900 may be executed multiple times to determine the properties for multiple batteries and/or modified to determine the properties for multiple batteries at a time.

At block 902, the battery monitor 128 determines whether battery communications are detected. For example, the battery monitor 128 may determine, via the communications circuitry 130, whether communication can be established with battery communications circuitry 136 via wired communications (e.g., via the battery terminals) and/or wireless communications (e.g., via RFID, NFC, Bluetooth, Wi-Fi, etc.).

If battery communications are detected (block 902), at block 904 the battery monitor 128 downloads battery identifying information from the battery communications circuitry 136 via the communications circuitry 130.

If battery communications are not detected (block 902), at block 906 the battery monitor 128 determines whether battery identifying information has been received via the user interface 116. For example, the operator may be permitted to enter battery identifying information, such as a model number, serial number, description, and/or other information, via the user interface 116.

After downloading the identifying information from the battery (block 904) or receiving the battery identifying information via the user interface 116 (block 906), at block 908 the battery monitor 128 (or the control circuitry 114) looks up battery properties based on the battery identifying information. For example, the battery monitor 128 may access a server, internal or external look up table, artificial intelligence model, fuzzy logic model, neural network, or other battery information repository to determine the properties of the battery based on the identifying information. Example battery properties may include a battery temperature, a battery temperature curve, a battery charge level, a battery charge capacity, a battery impedance, an upper current limit, a battery size, a battery chemistry, a battery brand, a battery model, a number of charge-discharge cycles, a battery ampere-hour rating, a battery voltage, a battery energy density, a specific energy density, a power density, and/or a battery discharge curve.

After looking up battery properties (block 908), or if battery identifying information has not been received (block 906), at block 910 the battery monitor 128 determines whether battery properties have been received via the user interface 116. For example, the user interface 116 may allow the operator to enter one or more battery properties into the user interface 116. If battery properties have been received via the user interface 116 (block 910), at block 912 the battery monitor 128 sets the battery properties based on the received properties.

After setting the battery properties based on the received properties (block 912), or if battery properties have not been received via the user interface 116 (block 910), at block 914 the battery monitor 128 determines whether to test the battery for one or more properties (e.g., desired properties which have not been received at other blocks). If the battery monitor 128 determines that the battery is to be tested (block 914), at block 916 the battery test circuitry 132 conducts tests and/or measurements of the battery to determine one or more battery properties. For example, the battery test circuitry 132 may test the battery to determine voltage, peak current, temperature, charge level, and/or any other testable properties. Additionally or alternatively, the battery test circuitry 132 may be used to verify properties entered by the operator or received via look up based on battery identifying information (e.g., from communications with the battery and/or via the user interface 116).

After testing and/or measuring the battery properties (block 916), or if the battery is not to be tested (block 914), the example instructions 900 may end and return control to block 806 of FIG. 8A.

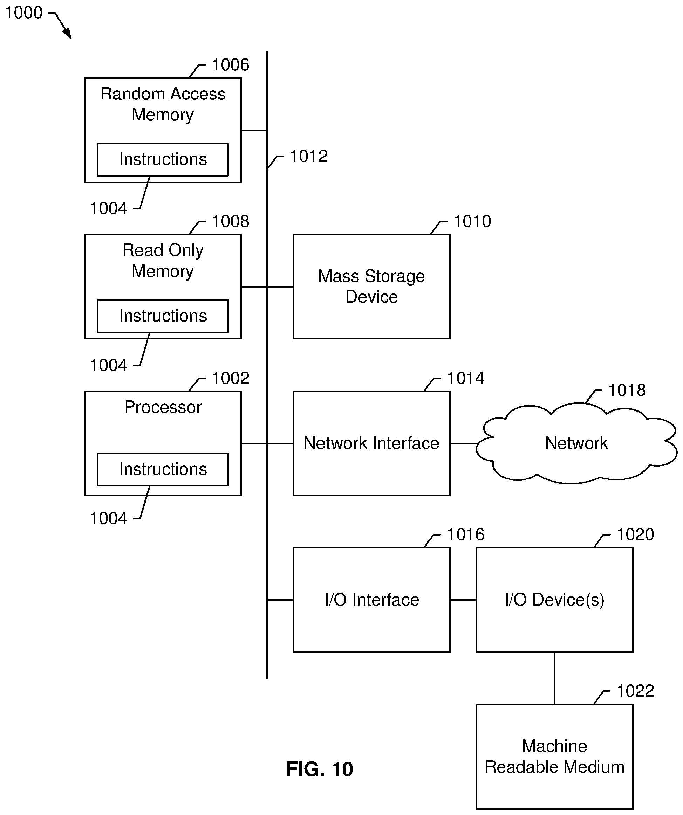

FIG. 10 is a block diagram of an example computing device 1000 that may implement the computing device 616 and/or the external computing system 618 of FIG. 6. The example computing device 1000 of FIG. 10 may be a general-purpose computer, a laptop computer, a tablet computer, a mobile device, a server, and/or any other type of computing device. In some examples, the computing device 1000 may be implemented in a cloud computing environment using one or more physical machines and, in some examples, one or more virtual machines in the data center.

The example computing device 1000 of FIG. 10 includes a processor 1002. The example processor 1002 may be any general purpose central processing unit (CPU) from any manufacturer. In some other examples, the processor 1002 may include one or more specialized processing units, such as graphic processing units and/or digital signal processors. The processor 1002 executes machine readable instructions 1004 that may be stored locally at the processor (e.g., in an included cache), in a random access memory 1006 (or other volatile memory), in a read only memory 1008 (or other non-volatile memory such as FLASH memory), and/or in a mass storage device 1010. The example mass storage device 1010 may be a hard drive, a solid state storage drive, a hybrid drive, a RAID array, and/or any other mass data storage device.

A bus 1012 enables communications between the processor 1002, the RAM 1006, the ROM 1008, the mass storage device 1010, a network interface 1014, and/or an input/output interface 1016.

The example network interface 1014 includes hardware, firmware, and/or software to connect the computing device 1000 to a communications network 1018 such as the Internet. For example, the network interface 1014 may include IEEE 802.X-compliant wireless and/or wired communications hardware for transmitting and/or receiving communications.

The example I/O interface 1016 of FIG. 10 includes hardware, firmware, and/or software to connect one or more input/output devices 1020 to the processor 1002 for providing input to the processor 1002 and/or providing output from the processor 1002. For example, the I/O interface 1016 may include a graphics processing unit for interfacing with a display device, a universal serial bus port for interfacing with one or more USB-compliant devices, a FireWire, a field bus, and/or any other type of interface. Example I/O device(s) 1020 may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device.

The example computing device 1000 may access a non-transitory machine readable medium 1022 via the I/O interface 1016 and/or the I/O device(s) 1020. Examples of the machine readable medium 1022 of FIG. 10 include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine readable media.

The present methods and systems may be realized in hardware, software, and/or a combination of hardware and software. Example implementations include an application specific integrated circuit and/or a programmable control circuit.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims.

## Claims

1. A welding system (100), comprising:
a power input (122) configured to receive input power from one or more batteries (106, 206);
power conversion circuitry (110) configured to convert the input power from the one or more batteries (106) to welding power;
a user interface (116) configured to input one or more parameters for the welding power;
a battery monitor (128) configured to determine (804) one or more properties of the one or more batteries (106); and
**characterized in that** the welding system (100) comprises control circuitry (114) configured to:
determine (818) a welding capacity associated with the one or more parameters for the welding power and based on the determined one or more properties of the one or more batteries (106, 206);
in response to determining that the welding capacity does not support the one or more parameters for the welding power, output an indication representative of at least one limitation on the one or more parameters for the welding power based on the welding capacity;
in response to determining that the welding capacity supports the one or more parameters for the welding power, output an indication of remaining welding capacity; and
control (826) the power conversion circuitry (110) based on the one or more parameters.

2. The welding system (100) as defined in claim 1, further comprising a utility power monitor (138) configured to determine whether utility power is input to the power input and, when the utility power is input to the power input, to determine one or more properties of the utility power.

3. The welding system as defined in claim 2, wherein the control circuitry is configured to determine (818) the welding capacity based on the one or more properties of the utility power, or wherein the one or more properties of the utility power comprise at least one of a source type of the utility power, an input voltage of the utility power, a number of phases of the utility power, a circuit breaker type of the utility power, or a circuit breaker rating of the utility power.

4. The welding system (100) as defined in claim 2, further comprising load sharing circuitry (142) configured to control a balance of power input from the utility power and the one or more batteries (106, 206).

5. The welding system (100) as defined in claim 1, wherein the one or more parameters of the welding power comprise at least one of workpiece thickness, output voltage, output current, wire feed speed, welding wire diameter, welding wire type, welding process, pulse frequency, or pulse magnitude, or further comprising communication circuitry (130) configured to communicate the one or more alternative parameters or the duration to a welding accessory.

6. The welding system (100) as defined in claim 1, wherein the battery monitor (128) comprises battery test circuitry (132) configured to test the one or more batteries (106, 206) to determine the at least one of the one or more properties of the one or more batteries (106, 206), or wherein the battery monitor (128) comprises communication circuitry configured to communicate with the one or more batteries (106, 206) to determine the at least one of the one or more properties of the one or more batteries (106, 206).

7. The welding system (100) as defined in claim 1, wherein the one or more properties of the one or more batteries (106, 206) comprise at least one of a battery temperature, a battery temperature curve, a battery charge level, a battery charge capacity, a battery impedance, an upper current limit, a battery size, a battery chemistry, a battery brand, a battery model, a number of charge-discharge cycles, a battery ampere-hour rating, a battery voltage, a battery energy density, a specific energy density, a power density, or a battery discharge curve, or wherein the control circuitry (114) is configured to:
determine (812), based on the determined one or more properties of the one or more batteries, supported values of the one or more parameters and unsupported values of the one or more parameters;
display (814) the supported values of the one or more parameters and the unsupported values of the one or more parameters via the user interface (116);
receive supported values of the one or more parameters via the user interface (116); and
control (826) the power conversion circuitry (110) based on the received values of the one or more parameters.

8. The welding system (100) as defined in claim 1, wherein the control circuitry (114) is configured to:
determine one or more alternative parameters based on the welding capacity; and
output the one or more alternative parameters via the user interface (116), or
wherein the control circuitry (114) is configured to output the indication of the remaining welding capacity as at least one of a remaining welding duration using the one or more parameters, a length of welding using the one or more parameters, or a number of welds of predetermined length using the one or more parameters.

9. The welding system (100) as defined in claim 1, wherein the control circuitry (114) is configured to calculate a quantity of welding that can be performed in terms of an electrode to be used for a welding operation according to the one or more parameters, and display the quantity of welding in the terms of the electrode, and optionally wherein the control circuitry is configured to display the quantity of welding that can be performed as at least one of: pounds of wire electrode, inches of wire electrode, a number of stick electrodes, or inches of welding.

## Patentansprüche

1. Schweißsystem (100), aufweisend:
einen Leistungseingang (122), der ausgelegt ist, um Eingangsleistung von einer oder mehreren Batterien (106, 206) zu empfangen;
eine Leistungsumwandlungsschaltung (110), die ausgelegt ist, um die Eingangsleistung von der einen oder den mehreren Batterien (106) in Schweißleistung umzuwandeln;
eine Benutzerschnittstelle (116), die ausgelegt ist, um einen oder mehrere Parameter für die Schweißleistung einzugeben;
eine Batterieüberwachung (128), die ausgelegt ist, um eine oder mehrere Eigenschaften der einen oder mehreren Batterien (106) zu bestimmen (804); und
**dadurch gekennzeichnet, dass** das Schweißsystem (100) eine Steuerschaltung (114) aufweist, die ausgelegt ist für:
Bestimmen (818) einer Schweißkapazität, die mit dem einen oder den mehreren Parametern für die Schweißleistung verbunden ist und auf der bestimmten einen oder mehreren Eigenschaften der einen oder mehreren Batterien (106, 206) basiert;
in Reaktion auf das Bestimmen, dass die Schweißkapazität den einen oder die mehreren Parameter für die Schweißleistung nicht unterstützt, Ausgeben einer Angabe, die mindestens eine Begrenzung des einen oder der mehreren Parameter für die Schweißleistung basierend auf der Schweißkapazität darstellt;
in Reaktion auf das Bestimmen, dass die Schweißkapazität den einen oder die mehreren Parameter für die Schweißleistung unterstützt, Ausgeben einer Anzeige der verbleibenden Schweißkapazität; und
Steuern (826) der Leistungsumwandlungsschaltung (110) basierend auf dem einen oder den mehreren Parametern.

2. Schweißsystem (100) nach Anspruch 1, ferner aufweisend einen Versorgungsleistungsmonitor (138), der ausgelegt ist, um zu ermitteln, ob Versorgungsleistung in den Leistungseingang eingespeist wird, und, wenn die Versorgungsleistung in den Leistungseingang eingespeist wird, um eine oder mehrere Eigenschaften der Versorgungsleistung zu bestimmen.

3. Schweißsystem nach Anspruch 2, wobei die Steuerschaltung ausgelegt ist, um die Schweißkapazität basierend auf einer oder mehreren Eigenschaften der Versorgungsleistung zu bestimmen (818), oder wobei die eine oder mehreren Eigenschaften der Versorgungsleistung mindestens eine von einem Quellentyp der Versorgungsleistung, einer Eingangsspannung der Versorgungsleistung, einer Anzahl von Phasen der Versorgungsleistung, einem Unterbrechertyp der Versorgungsleistung oder einer Unterbrecherleistung der Versorgungsleistung aufweisen.

4. Schweißsystem (100) nach Anspruch 2, ferner aufweisend eine Lastverteilungsschaltung (142), die ausgelegt ist, um ein Gleichgewicht der Leistungseingabe von der Versorgungsleistung und der einen oder mehreren Batterien (106, 206) zu steuern.

5. Schweißsystem (100) nach Anspruch 1, wobei der eine oder die mehreren Parameter der Schweißleistung mindestens eines aufweisen von Werkstückdicke, Ausgangsspannung, Ausgangsstrom, Drahtvorschubgeschwindigkeit, Schweißdrahtdurchmesser, Schweißdrahttyp, Schweißvorgang, Impulsfrequenz oder Impulsgröße, oder ferner aufweisend eine Kommunikationsschaltung (130), die ausgelegt ist, den einen oder die mehreren alternativen Parameter oder die Dauer an ein Schweißzubehör übermittelt.

6. Schweißsystem (100) nach Anspruch 1, wobei der Batteriemonitor (128) eine Batterietestschaltung (132) aufweist, die ausgelegt ist, die eine oder mehreren Batterien (106, 206) zu testen, um mindestens eine der einen oder mehreren Eigenschaften der einen oder mehreren Batterien (106, 206) zu bestimmen, oder wobei der Batteriemonitor (128) eine Kommunikationsschaltung aufweist, die ausgelegt ist, mit der einen oder den mehreren Batterien (106, 206) zu kommunizieren, um mindestens eine der einen oder mehreren Eigenschaften der einen oder mehreren Batterien (106, 206) zu bestimmen.

7. Schweißsystem (100) nach Anspruch 1, wobei die eine oder mehreren Eigenschaften der einen oder mehreren Batterien (106, 206) mindestens eines aufweisen von einer Batterietemperatur, einer Batterietemperaturkurve, einem Batterieladestand, einer Batterieladekapazität, einer Batterieimpedanz, einer oberen Stromgrenze , einer Batteriegröße, einer Batteriechemie, einer Batteriemarke, einem Batteriemodell, einer Anzahl von Lade-Entlade-Zyklen, einer Batterie-Ampere-Stunden-Nennleistung, einer Batteriespannung, einer Batterie-Energiedichte, einer spezifischen Energiedichte, einer Leistungsdichte oder einer Batterie-Entladekurve, oder wobei die Steuerschaltung (114) ausgelegt ist für:
Bestimmen (812), basierend auf der bestimmten einen oder mehreren Eigenschaften der einen oder mehreren Batterien, unterstützter Werte der einen oder mehreren Parameter und nicht unterstützter Werte der einen oder mehreren Parameter;
Anzeigen (814) der unterstützten Werte des einen oder der mehreren Parameter und der nicht unterstützten Werte des einen oder der mehreren Parameter über die Benutzerschnittstelle (116);
Empfangen unterstützter Werte des einen oder der mehreren Parameter über die Benutzerschnittstelle (116); und
Steuern (826) der Leistungsumwandlungsschaltung (110) basierend auf den empfangenen Werten des einen oder der mehreren Parameter.

8. Schweißsystem (100) nach Anspruch 1, wobei die Steuerschaltung (114) ausgelegt ist für:
Bestimmen eines oder mehrerer alternativer Parameter basierend auf der Schweißkapazität; und
Ausgeben des einen oder der mehreren alternativen Parameter über die Benutzerschnittstelle (116), oder
wobei die Steuerschaltung (114) ausgelegt ist, die Angabe der verbleibenden Schweißkapazität als mindestens eines von einer verbleibenden Schweißdauer unter Verwendung des einen oder mehrerer Parameter, einer Schweißdauer unter Verwendung des einen oder mehrerer Parameter oder einer Anzahl von Schweißungen vorgegebener Länge unter Verwendung des einen oder mehrerer Parameter auszugeben.

9. Schweißsystem (100) nach Anspruch 1, wobei die Steuerschaltung (114) ausgelegt ist, eine Schweißmenge zu berechnen, die in Bezug auf eine für einen Schweißvorgang zu verwendende Elektrode gemäß dem einen oder den mehreren Parametern durchgeführt werden kann, und die Schweißmenge in Bezug auf die Elektrode anzuzeigen, und optional, wobei die Steuerschaltung ausgelegt ist, die Schweißmenge, die durchgeführt werden kann, als mindestens eines anzuzeigen von: Pfund der Drahtelektrode, Zoll der Drahtelektrode, eine Anzahl von Stabelektroden oder Zoll der Schweißung.

## Revendications

1. Système de soudage (100) comprenant :
une entrée de puissance (122) configurée pour recevoir une puissance d'entrée de la part d'une ou plusieurs batteries (106, 206) ;
des circuits de conversion de puissance (110) configurés pour convertir la puissance d'entrée de la ou des batteries (106) en puissance de soudage ;
une interface utilisateur (116) configurée pour saisir un ou plusieurs paramètres pour la puissance de soudage ;
un moniteur de batterie (128) configuré pour déterminer (804) une ou plusieurs propriétés de la ou des batteries (106) ; et
**caractérisé en ce que** le système de soudage (100) comprend un circuit de commande (114) configuré pour :
déterminer (818) une capacité de soudage associée aux un ou plusieurs paramètres pour la puissance de soudage et sur la base des une ou plusieurs propriétés déterminées de la ou des batteries (106, 206) ;
en réponse à la détermination que la capacité de soudage ne prend pas en charge le ou les paramètres pour la puissance de soudage, fournir une indication représentative d'au moins une limitation sur le ou les paramètres pour la puissance de soudage sur la base de la capacité de soudage ;
en réponse à la détermination que la capacité de soudage prend en charge le ou les paramètres pour la puissance de soudage, fournir une indication de la capacité de soudage restante ; et
contrôler (826) les circuits de conversion de puissance (110) sur la base du ou des paramètres.

2. Système de soudage (100) selon la revendication 1, comprenant en outre un moniteur de puissance utilitaire (138) configuré pour déterminer si la puissance utilitaire est entrée dans l'entrée de puissance et, lorsque la puissance utilitaire est entrée dans l'entrée de puissance, pour déterminer une ou plusieurs propriétés de la puissance utilitaire.

3. Système de soudage selon la revendication 2, dans lequel le circuit de commande est configuré pour déterminer (818) la capacité de soudage sur la base des une ou plusieurs propriétés de l'énergie utilitaire, ou dans lequel les une ou plusieurs propriétés de l'énergie utilitaire comprennent l'au moins un élément parmi un type de source de l'énergie utilitaire, une tension d'entrée de l'énergie utilitaire, un nombre de phases de l'énergie utilitaire, un type de disjoncteur de l'énergie utilitaire, ou un calibre de disjoncteur de l'énergie utilitaire.

4. Système de soudage (100) selon la revendication 2, comprenant en outre un circuit de partage de charge (142) configuré pour commander un équilibre d'entrée de puissance à partir de l'alimentation électrique et de la ou des batteries (106, 206).

5. Système de soudage (100) selon la revendication 1, dans lequel le ou les paramètres de la puissance de soudage comprennent l'au moins un parmi l'épaisseur de la pièce, la tension de sortie, le courant de sortie, la vitesse d'alimentation du fil, le diamètre du fil de soudage, le type de fil de soudage, le processus de soudage, la fréquence d'impulsion ou l'amplitude d'impulsion, ou comprenant en outre un circuit de communication (130) configuré pour communiquer le ou les paramètres alternatifs ou la durée à un accessoire de soudage.

6. Système de soudage (100) selon la revendication 1, dans lequel le moniteur de batterie (128) comprend un circuit de test de batterie (132) configuré pour tester la ou les batteries (106, 206) pour déterminer la ou les propriétés de la ou des batteries (106, 206), ou dans lequel le moniteur de batterie (128) comprend des circuits de communication configurés pour communiquer avec la ou les batteries (106, 206) pour déterminer l'au moins une parmi la ou les propriétés de la ou des batteries (106, 206).

7. Système de soudage (100) selon la revendication 1, dans lequel la ou les propriétés de la ou des batteries (106, 206) comprennent l'au moins une température de batterie, une courbe de température de batterie, un niveau de charge de batterie, une capacité de charge de batterie, une impédance de batterie, une limite supérieure de courant, une taille de batterie, une chimie de batterie, une marque de batterie, un modèle de batterie, un nombre de cycles de charge-décharge, une évaluation de l'ampère-heure de la batterie, une tension de batterie, une densité d'énergie de la batterie, une densité d'énergie spécifique, une densité de puissance, ou une courbe de décharge de batterie, ou dans lequel le circuit de commande (114) est configuré pour :
déterminer (812), sur la base de la ou des propriétés déterminées de la ou des batteries, des valeurs prises en charge du ou des paramètres et des valeurs non prises en charge du ou des paramètres ;
afficher (814) les valeurs supportées du ou des paramètres et les valeurs non supportées du ou des paramètres par l'intermédiaire de l'interface utilisateur (116) ;
recevoir les valeurs supportées du ou des paramètres via l'interface utilisateur (116) ; et
contrôler (826) les circuits de conversion de puissance (110) sur la base des valeurs reçues du ou des paramètres.

8. Système de type soudage (100) selon la revendication 1, dans laquelle le circuit de commande (114) est configuré pour :
déterminer un ou plusieurs paramètres alternatifs sur la base de la capacité de soudage ; et
la sortie du ou des paramètres alternatifs via l'interface utilisateur (116), ou
dans lequel le circuit de commande (114) est configuré pour délivrer l'indication de la capacité de soudage restante comme l'au moins une d'une durée de soudage restante en utilisant le ou les paramètres, d'une longueur de soudage en utilisant le ou les paramètres, ou d'un nombre de soudures de longueur prédéterminée en utilisant le ou les paramètres.

9. Système de soudage (100) selon la revendication 1, dans lequel le circuit de commande (114) est configuré pour calculer une quantité de soudage qui peut être effectuée en termes d'une électrode à utiliser pour une opération de soudage selon le ou les paramètres, et afficher la quantité de soudure en termes d'électrode, et éventuellement dans lequel le circuit de commande est configuré pour afficher la quantité de soudure qui peut être effectuée comme au moins un parmi : livres de fil-électrode, pouces de fil-électrode, un certain nombre d'électrodes en bâton, ou pouces de soudure.
